# EUROPÄISCHE PATENTSCHRIFT

(11) **EP 3 631 510 B1**
(45) Veröffentlichungstag und Bekanntmachung des Hinweises auf die Patenterteilung: **14.08.2024**
(21) Anmeldenummer: 18723821.7
(22) Anmeldetag: 09.05.2018
(51) Int. Cl.: G01S 17/42, G01S 7/481, G02B 26/10

(54) **LIDAR-VORRICHTUNG UND VERFAHREN ZUM ABTASTEN EINES ABTASTWINKELS MIT MINDESTENS EINEM STRAHL KONSTANTER AUSRICHTUNG**
LIDAR DEVICE AND METHOD FOR SCANNING A SCANNING ANGLE WITH AT LEAST ONE BEAM OF A CONSTANT ORIENTATION
DISPOSITIF LIDAR ET PROCÉDÉ DE BALAYAGE D'UN ANGLE DE BALAYAGE AU MOYEN D'AU MOINS UN FAISCEAU D'ORIENTATION CONSTANTE

(30) Priorität: 24.05.2017 DE 102017208860
(43) Veröffentlichungstag der Anmeldung: 08.04.2020
(73) Patentinhaber: Robert Bosch GmbH, 70442 Stuttgart (DE)
(72) Erfinder: HOLLECZEK, Annemarie, 4701-970 Braga (PT); BAIER, Matthias, 74251 Lehrensteinsfeld (DE)
(86) Internationale Anmeldenummer: PCT/EP2018/061982
(87) Internationale Veröffentlichungsnummer: WO 2018/215212

(56) Entgegenhaltungen:
- EP-A1- 2 492 738
- JP-A- S57 135 914

## Beschreibung

Die Erfindung betrifft eine LIDAR-Vorrichtung zum Abtasten eines Abtastwinkels mit mindestens einem Strahl sowie ein Verfahren zum Betrieb einer LIDAR-Vorrichtung.

### Stand der Technik

Aktuelle LIDAR (Light detection and ranging)-Vorrichtungen nutzen eine Laser bzw. Strahlenquelle zum Erzeugen eines Laserstrahls, der anschließend über eine Ablenkeinheit, wie beispielsweise ein drehbarer Spiegel, und über einen Abtastbereich abgelenkt werden kann. Üblicherweise wird der Strahl von der Strahlenquelle derart erzeugt, dass der Strahl durch eine Rotationsachse der Ablenkeinheit verläuft und um einen Winkel von ca. 45° senkrecht zu der Rotationsachse abgelenkt wird. Durch die Rotation kann ein Abtastbereich mit einem horizontalen Winkel von 360° um die LIDAR-Vorrichtung herum abgetastet werden. Ein Detektor kann reflektierte Strahlen empfangen und auswerten. Sowohl die Laserquelle, als auch der Detektor können dabei ortsfest angeordnet sein. Bei einer derartigen LIDAR-Vorrichtung verändert der von der Ablenkeinheit reflektierte Strahl jedoch seine Orientierung durch die Rotation der Ablenkeinheit um einen horizontalen Winkel von beispielsweise 360°. Wenn beispielsweise ein linienförmiger Strahl erzeugt wird, so lässt sich eine Linienausleuchtung nicht ohne eine Drehung der Linienorientierung über große Raumwinkel realisieren. Bei größeren horizontalen Winkeln wird ein ursprünglich vertikal ausgerichteter linienförmiger Strahl derart durch die Ablenkeinheit bei ihrer Rotation gedreht, dass er horizontal oder diagonal ausgerichtet in den Abtastbereich abgestrahlt werden kann.

EP 2 492 738 A1 offenbart einen optoelektronischen Sensor und ein Verfahren zur Erfassung von Objekten. Der Sensor ist als ein Laserscanner ausgestaltet und weist eine Lichtquelle zum Aussenden von Lichtstrahlen mit einem langgestreckten Strahlenprofil. Des Weiteren weist der Sensor einen Lichtempfänger zum Detektieren von remittierten Lichtstrahlen sowie eine bewegliche Ablenkeinheit zur periodischen Ablenkung der erzeugten und remittierten Lichtstrahlen. Der Sensor weist eine Tandemzylinderlinsenanordnung zum Korrigieren einer Ausrichtung der erzeugten Lichtstrahlen auf. Weiterer Stand der Technik ist aus der JP S57 135914 A bekannt.

### Offenbarung der Erfindung

Die der Erfindung zugrunde liegende Aufgabe kann darin gesehen werden, ein Verfahren und eine LIDAR-Vorrichtung zum Abtasten eines Abtastbereiches mit mindestens einem Strahl zu schaffen, der eine konstante Orientierung über den gesamten Abtastbereich und vorzugsweise eine verringerte rotierende Masse aufweist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird eine LIDAR-Vorrichtung zum Abtasten eines Abtastwinkels mit mindestens einem Strahl bereitgestellt. Die LIDAR-Vorrichtung weist mindestens eine Strahlenquelle zum Erzeugen des mindestens einen Strahls, eine optionale Erzeugungsoptik zum Formen des mindestens einen erzeugten Strahls und eine rotierbare Ablenkeinheit zum Ablenken des mindestens einen erzeugten Strahls auf. Des Weiteren weist die LIDAR-Vorrichtung einen Detektor zum Empfangen mindestens eines an einem Objekt reflektierten Strahls auf, wobei in einem Strahlengang des mindestens einen Strahls zwischen der optionalen Erzeugungsoptik oder der Strahlenquelle und der Ablenkeinheit mindestens zwei, um einen Winkel zueinander verdrehte, Zylinderlinsen angeordnet sind und wobei mindestens eine Zylinderlinse drehbar ist.

Hierbei kann durch mindestens eine Strahlenquelle mindestens ein elektromagnetischer Strahl erzeugt werden. Die Strahlenquelle kann beispielsweise ein Laser sein. Durch die optionale Erzeugungsoptik kann der mindestens eine Strahl geformt werden. Beispielsweise kann ein Strahl, der punktförmig oder kreisförmig ausgeführt ist, zu einer Linie fokussiert werden. Die optionale Erzeugungsoptik kann somit beispielsweise eine Zylinderlinse, eine Fresnellinse, ein diffraktives optisches Element, eine Tandemzylinderlinse und dergleichen sein. Alternativ oder zusätzlich kann der mindestens eine erzeugte Strahl zu einem Punktraster geformt werden. Hierbei kann die optionale Erzeugungsoptik zusätzliche Strahlteiler aufweisen oder eine Vielzahl an Strahlen durch mehrere Strahlenquellen erzeugt werden. In dem Punktraster werden die einzelnen Punkte jeweils von einem erzeugten Strahl gebildet. Das Punktraster kann beispielsweise als eine Linie, ein Kreis, ein Rechteck und dergleichen geformt sein. Durch das Einfügen einer geeigneten Strahlablenkung vor der rotierbaren Ablenkeinheit kann eine Linie oder ein Punktraster über alle Raumrichtungen hinweg unter Beibehaltung der Linienorientierung in die Umgebung bzw. einen Abtastbereich abgestrahlt werden. Somit kann einer Rotation einer Orientierung des erzeugten und durch die Ablenkeinheit abgelenkten Strahles entgegengewirkt werden. Dies kann analog bei einem erzeugten Punktraster angewendet werden. Hierbei werden die erzeugten Punkte eines Punktrasters während einer Umdrehung der Ablenkeinheit um beispielsweise 360° zwei Mal in ihre Reihenfolge vertauscht. Ein Verkippen oder Rotieren des mindestens einen erzeugten Strahls verursacht eine stetige Änderung der Fläche des mindestens einen erzeugten und geformten Strahls und damit auch eine Änderung des Abtastbereichs bzw. eines vertikalen Abtastwinkels der LIDAR-Vorrichtung. Die mindestens zwei kombinierten Zylinderlinsen sind um einen Winkel zueinander verdreht angeordnet. Die Zylinderlinsen weisen einen Abstand zueinander auf, der kleiner als eine Brennweite der Zylinderlinsen ist. Vorteilhafterweise weisen die Zylinderlinsen dieselben optischen Eigenschaften, wie beispielsweise Brennweite, geometrische Abmessungen und Brechungsindex, auf. Alternativ können die Zylinderlinsen in ihren optischen Eigenschaften voneinander abweichen.

Mindestens eine Zylinderlinse ist hierbei um ihre optische Achse drehbar angeordnet. Hierbei können auch mehrere Zylinderlinsen als ein Verbund gemeinsam drehbar angeordnet sein. In einem Verbund können die Zylinderlinsen einen definierten konstanten oder einen veränderlichen Winkelversatz zueinander aufweisen. Die optische Achse der Zylinderlinsen ist vorzugsweise gleichzeitig die optische Achse des mindestens einen erzeugten Strahls. Die mindestens eine Zylinderlinse bzw. der Verbund von mindestens zwei Zylinderlinsen kann hierbei synchron mit der Rotation der Ablenkeinheit drehbar sein. Alternativ oder zusätzlich kann die Rotationsgeschwindigkeit abhängig von einem Einsatzbereich der LIDAR-Vorrichtung verringert oder erhöht werden. Hierdurch kann beispielsweise der vertikale Abtastwinkel variiert und beispielsweise eine vertikale Abtastbreite des Abtastbereichs verringert oder vergrößert werden. Da der mindestens eine Strahl während der gesamten Rotation in derselben Ausrichtung auf die Ablenkeinheit trifft, verändert sich die Orientierung und die Verteilung des mindestens einen Strahls unter allen Abstrahlwinkeln der Ablenkvorrichtung nicht oder auf eine definierte Weise. Durch das Verwenden von mindestens zwei Zylinderlinsen, die verdreht zueinander angeordnet sind, wird der erzeugte und bereits geformte mindestens eine Strahl in mindestens zwei Schritten gedreht. Hierdurch werden möglichst viele optische Informationen des erzeugten und geformten Strahls über die Zylinderlinsen übertragen und Verluste minimiert.

Gemäß eines Ausführungsbeispiels der LIDAR-Vorrichtung weist die Ablenkeinheit einen Abstand zu der der Ablenkeinheit benachbarten Zylinderlinse auf, der einer Brennweite der benachbarten Zylinderlinse entspricht. Hierdurch wird der durch die der Ablenkeinheit benachbarte Zylinderlinse gebündelte Strahl auf die Ablenkeinheit fokussiert. Somit liegt die Ablenkeinheit in einem Brennpunkt der benachbarten Zylinderlinse und ermöglicht eine optimale Abbildung des Strahls durch die Ablenkeinheit in dem Abtastbereich.

Nach einem weiteren Ausführungsbeispiel der LIDAR-Vorrichtung sind die mindestens zwei Zylinderlinsen hierbei um einen Winkel von 45° zueinander verdreht angeordnet. Der ursprünglich kreisförmige, von der Strahlenquelle erzeugte, Strahl wird durch eine optionale Erzeugungsoptik bzw. eine erste Zylinderlinse zu einer Linie geformt. Durch die beiden weiteren Zylinderlinsen, die um 45° zueinander verdreht angeordnet sind, kann der linienförmige Strahl auf der Ablenkeinheit rotiert werden. Die Ablenkeinheit kann beispielsweise ein rotierbarer Spiegel sein.

Gemäß eines weiteren Ausführungsbeispiels der Vorrichtung weist die Ablenkeinheit einen Abstand zu der von der Ablenkeinheit benachbarten Zylinderlinse auf, der größer als die Brennweite der benachbarten Zylinderlinse ist. Hierdurch kann die Ablenkeinheit einen Abstand zu den Zylinderlinsen aufweisen, der größer als die Brennweite der zur Ablenkeinheit nächststehend angeordneten Zylinderlinse ist. Hierdurch kann die LIDAR-Vorrichtung flexibel konstruiert werden und ist nicht durch die optischen Eigenschaften der Zylinderlinsen limitiert. Hierbei sind die mindestens zwei Zylinderlinsen vorzugsweise um einen Winkel von 90° zueinander verdreht angeordnet. Da die Ablenkeinheit weiter von der der Ablenkeinheit benachbarten Zylinderlinse entfernt angeordnet ist als deren Brennweite, müssen die Zylinderlinsen in einem Winkel von 90° zueinander verdreht angeordnet sein, damit die Rotation des Strahls auf der Ablenkeinheit abbildbar ist.

Gemäß eines bevorzugten Ausführungsbeispiels der LIDAR-Vorrichtung ist mindestens eine Zylinderlinse synchron mit der Ablenkeinheit rotierbar. Die mindestens zwei Zylinderlinsen können hierzu beispielsweise mechanisch oder elektronisch mit der Ablenkeinheit verbunden sein. So können sich die Zylinderlinsen als Verbund mit einer gleichen Winkelgeschwindigkeit drehen wie die Ablenkeinheit. Insbesondere kann die Ablenkeinheit als mechanischer Antrieb für den Verbund von mindestens zwei Zylinderlinsen oder für eine einzelne Zylinderlinse dienen. Alternativ können die mindestens zwei Zylinderlinsen als Verbund oder eine der Zylinderlinsen einzeln mit einem separaten Antrieb geeignet für eine Rotation ausgerüstet sein, sodass die Zylinderlinsen entsprechend einem elektronischen Signal der Ablenkeinheit gedreht werden können bzw. synchronisiert werden können.

Gemäß einem weiteren Ausführungsbeispiel ist mindestens eine Zylinderlinse stationär angeordnet. Somit ist mindestens eine Zylinderlinse gemeinsam mit der Strahlenquelle und dem Detektor stationär angeordnet und wird nicht mitgedreht. Somit ist mindestens eine Zylinderlinse weiterhin rotierbar ausgeführt, um die Orientierung des Strahls korrigieren zu können. Hierdurch muss lediglich eine Zylinderlinse mitgedreht werden, sodass eine Rotationsmasse verringert werden kann.

Nach einem weiteren Ausführungsbeispiel weist der mindestens eine erzeugte Strahl eine Linienform auf. Der erzeugte Strahl kann abhängig von einem Einsatzbereich und den daraus resultierenden Anforderungen durch die optionale Erzeugungsoptik beliebig geformt werden. Beispielsweise kann der Strahl linienförmig ausgeführt sein. Vorzugsweise weist der Strahl eine zweidimensionale Linienform auf, mit welcher der Abtastbereich abgetastet werden kann. Vorteilhafterweise ist in diesem Fall die optionale Erzeugungsoptik eine Zylinderlinse oder eine Kombination aus einer Zylinderlinse mit weiteren optischen Elementen. So kann die optionale Erzeugungsoptik technisch einfach in Form einer einzigen Zylinderlinse ausgeführt sein.

Gemäß einem weiteren Ausführungsbeispiel der LIDAR-Vorrichtung weist der mindestens eine erzeugte Strahl eine Punktform auf. Hierdurch kann die optionale Erzeugungsoptik Strahlteiler, diffraktive optische Elemente oder dergleichen aufweisen, die mindestens einen von der Strahlenquelle erzeugten Strahl aufteilen bzw. in mehrere Strahlen auffächern können. Die einzelnen Strahlen bilden hierbei vorzugsweise einzelne Strahlenpunkte, die zum Belichten des Abtastbereiches verwendet werden können. Es kann der Abtastbereich durch ein Punktraster gepulst oder kontinuierlich belichtet werden. Hierdurch kann die LIDAR-Vorrichtung auch koaxial aufgebaut sein und gleichzeitig erzeugte Strahlen senden und reflektierte Strahlen empfangen. Hierzu können die erzeugten Strahlen und die reflektierten Strahlen zumindest einen geringfügigen Versatz zueinander aufweisen und vorzugsweise an unterschiedlichen Bereichen auf der Ablenkeinheit auftreffen. Da die mindestens eine Zylinderlinse rotierbar ausgeführt ist, behält das erzeugte Punktraster mit den einzelnen Strahlen seine Orientierung unabhängig von einer Ausrichtung der Ablenkeinheit. Hierdurch bleibt eine Reihenfolge der einzelnen Strahlen konstant.

Gemäß einem weiteren Ausführungsbeispiel der LIDAR-Vorrichtung weist die Ablenkeinheit einen planen oder gekrümmten Spiegel auf. Die Ablenkeinheit kann in einer technische einfachen Ausführung in Form eines rotierbaren oder schwenkbaren planen Spiegels ausgeführt sein. Alternativ kann der Spiegel eine gekrümmte oder konturierte Oberfläche aufweisen, die zum Korrigieren von Abbildungsfehlern der Zylinderlinsen ausgestaltet sein kann.

Nach einem weiteren Aspekt der Erfindung wird ein Verfahren zum Betrieb einer LIDAR-Vorrichtung zum Abtasten eines Abtastwinkels mit mindestens einem Strahl bereitgestellt. Es wird mindestens ein Strahl erzeugt und durch eine optionale Erzeugungsoptik geformt. Der mindestens eine Strahl wird anschließend durch mindestens eine drehbare Zylinderlinse um eine optische Achse gedreht und auf eine Ablenkeinheit abgebildet. Durch die Ablenkeinheit kann der mindestens eine Strahl entlang eines Abtastwinkels abgelenkt werden. Sofern sich ein Objekt im Abtastbereich befindet, wird mindestens ein an diesem Objekt reflektierter Strahl von einem Detektor über eine optionale Empfangsoptik empfangen und in elektrische Signale umgewandelt. Die elektrischen Signale können anschließend verarbeitet und ausgewertet werden.

Durch die mindestens eine drehbare Zylinderlinse kann der erzeugte und geformte Strahl bzw. mehrere Strahlen direkt oder indirekt abhängig von der Ablenkeinheit gedreht werden. Somit kann eine Orientierung des mindestens einen Strahls bei einem Belichten des Abtastbereiches korrigiert, beeinflusst oder konstant ausgerichtet werden. Vorzugsweise wird der mindestens eine erzeugte und durch die optionale Erzeugungsoptik geformte Strahl durch mindestens zwei Zylinderlinsen gedreht. Hierdurch wird der mindestens eine Strahl in mehreren Stufen um seine optische Achse gedreht und entsprechend einer Ausrichtung der Ablenkeinheit justiert.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer LIDAR-Vorrichtung gemäß einem ersten Ausführungsbeispiel,
- Fig. 2: Abbildungen eines Strahls auf einer Ablenkeinheit bei unterschiedlichen Drehwinkelstellungen eines Zylinderlinsenverbundes einer LIDAR-Vorrichtung gemäß dem ersten Ausführungsbeispiel,
- Fig. 3: eine schematische Darstellung einer LIDAR-Vorrichtung gemäß einem zweiten Ausführungsbeispiel,
- Fig. 4: Abbildungen eines Strahls auf einer Ablenkeinheit bei unterschiedlichen Drehwinkelstellungen eines Zylinderlinsenverbundes einer LIDAR-Vorrichtung gemäß dem zweiten Ausführungsbeispiel,
- Fig. 5: eine schematische Darstellung einer LIDAR-Vorrichtung gemäß einem dritten Ausführungsbeispiel,
- Fig. 6: Abbildungen eines Strahls auf einer Ablenkeinheit bei unterschiedlichen Drehwinkelstellungen eines Zylinderlinsenverbundes einer LIDAR-Vorrichtung gemäß dem dritten Ausführungsbeispiel und
- Fig. 7: ein Verfahren zum Abtasten eines Abtastbereiches gemäß einem ersten Ausführungsbeispiel.

In den Figuren weisen dieselben konstruktiven Elemente jeweils dieselben Bezugsziffern auf. Der Übersicht halber werden in den Figuren nur die zum Verständnis der Erfindung wesentlichen konstruktiven Elemente beziffert.

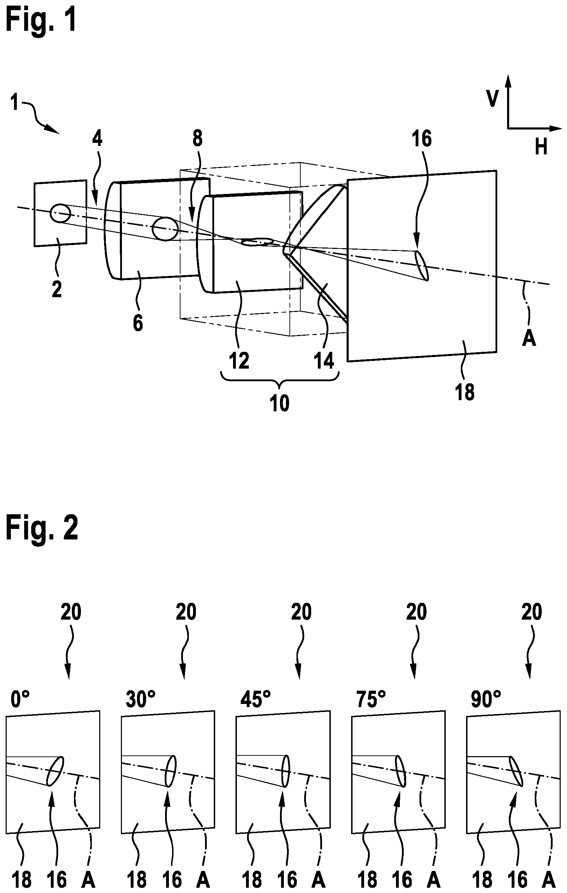

Die Figur 1 zeigt eine schematische Darstellung einer LIDAR-Vorrichtung 1 gemäß einem ersten Ausführungsbeispiel. Die LIDAR-Vorrichtung 1 weist hierbei eine Strahlenquelle 2 zum Erzeugen mindestens eines elektromagnetischen Strahls 4 auf. Die Strahlenquelle 2 ist gemäß dem Ausführungsbeispiel ein Laser 2, der einen Laserstrahl 4 erzeugt. Der erzeugte Strahl 4 wird auf eine Erzeugungsoptik 6 gestrahlt. Die Erzeugungsoptik 6 ist eine Zylinderlinse 6, die den erzeugten Strahl 4 in einer vertikalen Richtung V fokussiert und hinter einem Brennpunkt der Zylinderlinse 6 zu einem linienförmigen Strahl 8 auffächert. Der linienförmige Strahl trifft anschließend auf einen Zylinderlinsenverbund 10, der aus zwei Zylinderlinsen 12, 14 besteht. Der Zylinderlinsenverbund 10 ist als Ganzes drehbar ausgeführt. Als Rotationsachse dient hierbei die optische Achse A der LIDAR-Vorrichtung 1. Die beiden Zylinderlinsen 12, 14 sind gemäß dem Ausführungsbeispiel um einen konstanten Winkel von 45° zueinander verdreht angeordnet. Der Strahl 8 wird durch den rotierbaren Zylinderlinsenverbund 10 in zwei Schritten um die optische Achse A gedreht. Der gedrehte Strahl 16 kann anschließend auf eine rotierbare Ablenkeinheit 18 abgebildet werden. Die Ablenkeinheit 18 spiegelt den gedrehten Strahl 16 entlang eines Abtastbereiches. Die Ablenkeinheit 18 kann beispielsweise ein rotierbarer Spiegel 18 sein. Die Ablenkeinheit 18 weist gemäß dem Ausführungsbeispiel einen Abstand zu seiner benachbarten Zylinderlinse 14 auf, der einer Brennweite der Zylinderlinse 14 entspricht. Der Zylinderlinsenverbund 10 dreht sich hierbei synchron mit der Ablenkeinheit 18 und richtet den Strahl 8 derart aus, dass der gedrehte Strahl 16 mit einer konstanten Orientierung auf die Ablenkeinheit 18 trifft und somit mit einer konstanten Orientierung in den Abtastbereich reflektiert wird.

Die Figur 2 zeigt Abbildungen 20 des gedrehten Strahls 16 auf der Ablenkeinheit 18 bei unterschiedlichen Drehwinkeln des gesamten Zylinderlinsenverbundes 10 der LIDAR-Vorrichtung 1 gemäß dem ersten Ausführungsbeispiel. Die Drehwinkel des Zylinderlinsenverbundes 10 sind hierbei relativ zu einer Ausrichtung des Zylinderlinsenverbundes 10 gemäß der Figur 1 dargestellt, die einen Drehwinkel von 90° zeigt.

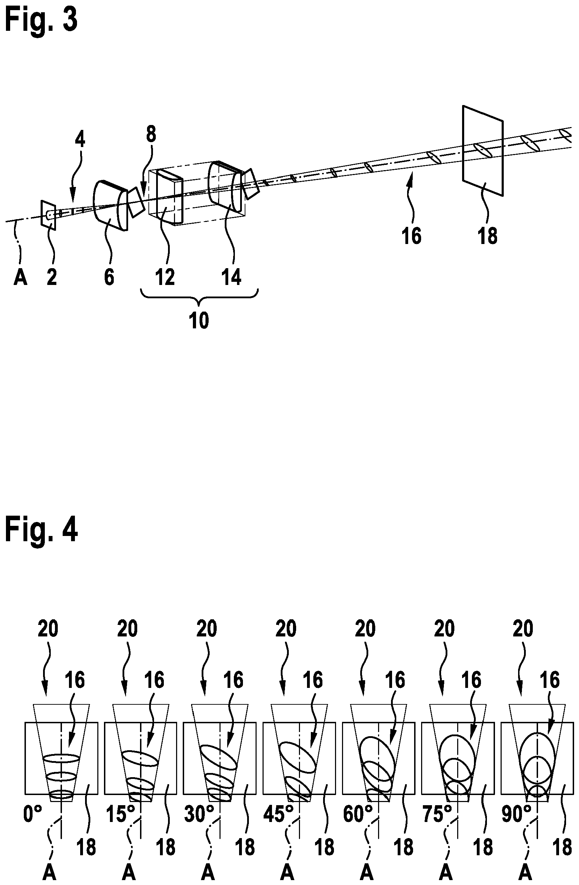

In der Figur 3 ist eine schematische Darstellung einer LIDAR-Vorrichtung 1 gemäß einem zweiten Ausführungsbeispiel dargestellt. Im Unterschied zum ersten Ausführungsbeispiel weist die LIDAR-Vorrichtung 1 eine Ablenkeinheit 18 auf, die in einem Abstand zu der benachbarten Zylinderlinse 14 angeordnet ist. Hierbei ist der Abstand größer als die Brennweite der Zylinderlinse 14. Damit der gedrehte Strahl 16 optimal auf der Ablenkeinheit 18 abgebildet werden kann, sind die Zylinderlinsen 12, 14 des Zylinderlinsenverbundes 10 in einem Winkel von 90° zueinander verdreht.

Die Figur 4 zeigt hierbei Abbildungen 20 des gedrehten Strahls 16 auf der Ablenkeinheit 18 bei unterschiedlichen Drehwinkelstellungen des Zylinderlinsenverbundes 10 der LIDAR-Vorrichtung 1 gemäß dem zweiten Ausführungsbeispiel. Der Zylinderlinsenverbund 10 weist gemäß der Figur 3 einen Drehwinkel von 0° auf. Die Abbildungen 20 verdeutlichen Formen des zum Zweck der Korrektur gedrehten Strahls 16 bei unterschiedlichen Drehwinkelstellungen des Zylinderlinsenverbundes 10 bei einem Auftreffen auf die Ablenkeinheit 18.

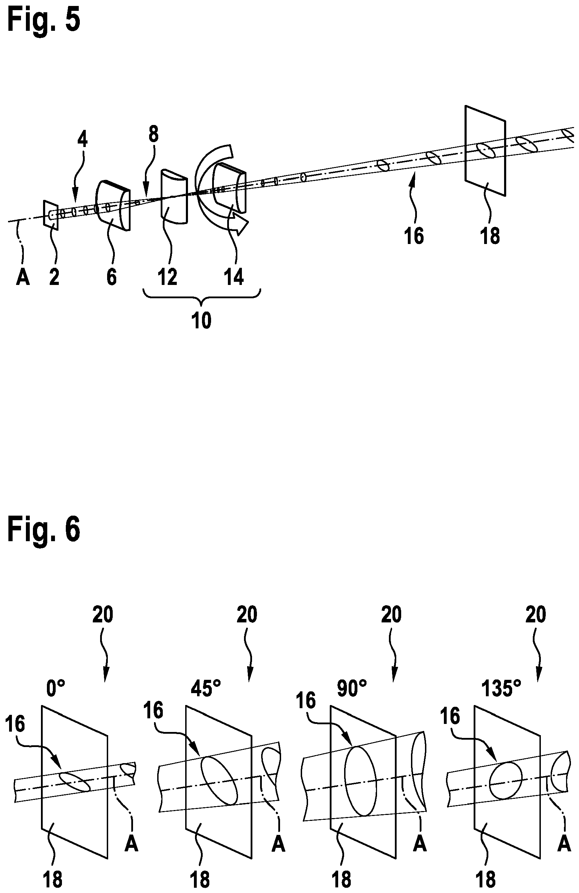

Die Figur 5 zeigt eine schematische Darstellung einer LIDAR-Vorrichtung 1 gemäß einem dritten Ausführungsbeispiel. Im Unterschied zu den bereits dargestellten Ausführungsbeispielen weist die LIDAR-Vorrichtung 1 keinen Zylinderlinsenverbund auf, der im Ganzen gedreht wird. Hierbei ist eine Zylinderlinse 12 mit der Erzeugungsoptik 6 stationär bzw. nicht drehbar ausgeführt. Die der Ablenkeinheit 18 benachbart angeordnete Zylinderlinse 14 ist gemäß dem Ausführungsbeispiel um die optische Achse A drehbar gelagert. Die Zylinderlinse 14 ist hierbei synchron mit der Ablenkeinheit 18 drehbar ausgeführt und justiert den geformten Strahl 8 relativ zu einer Ausrichtung der drehbaren Ablenkeinheit 18. Die Ablenkeinheit 18 ist analog zum zweiten Ausführungsbeispiel außerhalb der Brennweite der benachbarten Zylinderlinse 14 angeordnet.

In der Figur 6 sind Abbildungen 20 des gedrehten Strahls 16 auf der Ablenkeinheit 18 bei unterschiedlichen Drehwinkelstellungen der Zylinderlinse 14 der LIDAR-Vorrichtung 1 gemäß dem dritten Ausführungsbeispiel gezeigt. Die Zylinderlinse 14 weist hierbei in Figur 5 einen Drehwinkel von 0° auf. Hier wird insbesondere deutlich, dass bei der Rotation einer einzelnen Zylinderlinse 14 die Linienform des gedrehten Strahls 16 in eine ovale Form übergeht und somit eine Abbildungsqualität des Strahls 16 herabsetzt im Vergleich zu einem drehbaren Zylinderlinsenverbund 10.

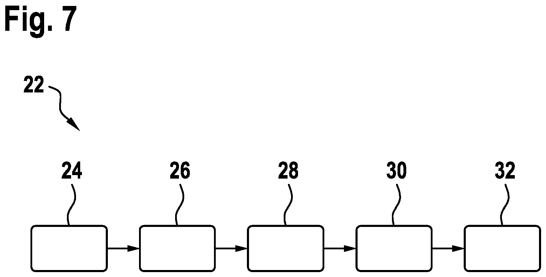

Die Figur 7 verdeutlicht ein Verfahren 22 zum Abtasten eines Abtastbereiches gemäß einem ersten Ausführungsbeispiel. Es wird dabei mindestens ein Strahl 4 erzeugt 24 und von einer Erzeugungsoptik 6 geformt 26. Der geformte Strahl 8 wird anschließend durch mindestens eine drehbare Zylinderlinse 12, 14 gedreht bzw. ausgerichtet 28 und auf eine Ablenkeinheit 18 projiziert. Die Ablenkeinheit 18 reflektiert den Strahl 16 und belichtet 30 mit dem Strahl 16 einen Abtastbereich. Der Strahl 16 wird derart gedreht, dass eine Orientierung des Strahls 16 konstant über einen Drehbereich der Ablenkeinheit bleibt. Ein an einem Objekt reflektierter Strahl 32 kann von einem Detektor und einer optionalen Empfangsoptik empfangen und detektiert werden.

## Patentansprüche

1. LIDAR-Vorrichtung (1) zum Abtasten eines Abtastwinkels mit mindestens einem Strahl (16), mit mindestens einer Strahlenquelle (2) zum Erzeugen des mindestens einen erzeugten Strahls (4), mit einer rotierbaren Ablenkeinheit (18) zum Ablenken des mindestens einen erzeugten Strahls (4) und mit einem Detektor zum Empfangen mindestens eines an einem Objekt reflektierten Strahls, wobei in einem Strahlengang des mindestens einen Strahls (8) zwischen der Strahlenquelle (2) und der Ablenkeinheit (18) mindestens zwei Zylinderlinsen (12, 14) angeordnet sind, und wobei imindestens eine der mindestens zwei Zylinderlinsen (12, 14) drehbar ist,
**dadurch gekennzeichnet, dass**
die mindestens zwei Zylinderlinsen (12, 14) um einen Winkel zueinander versetzt angeordnet sind.

2. LIDAR-Vorrichtung nach Anspruch 1, wobei die Ablenkeinheit (18) einen Abstand zu der von der Ablenkeinheit (18) benachbarten Zylinderlinse (14) aufweist, der einer Brennweite der benachbarten Zylinderlinse (14) entspricht.

3. LIDAR-Vorrichtung nach Anspruch 2, wobei die mindestens zwei Zylinderlinsen (12, 14) um einen Winkel von 45° zueinander verdreht angeordnet sind.

4. LIDAR-Vorrichtung nach Anspruch 1, wobei die Ablenkeinheit (18) einen Abstand zu der von der Ablenkeinheit (18) benachbarten Zylinderlinse (14) aufweist, der größer als die Brennweite der benachbarten Zylinderlinse (14) ist, wobei die mindestens zwei Zylinderlinsen (12, 14) um einen Winkel von 90° zueinander verdreht angeordnet sind.

5. LIDAR-Vorrichtung nach einem der Ansprüche 1 bis 4, wobei mindestens eine Zylinderlinse (12, 14) synchron mit der Ablenkeinheit rotierbar ist.

6. LIDAR-Vorrichtung nach einem der Ansprüche 1 bis 5, wobei mindestens eine Zylinderlinse (12) stationär angeordnet ist.

7. LIDAR-Vorrichtung nach einem der Ansprüche 1 bis 6, wobei der mindestens eine erzeugte Strahl (4, 8) eine Linienform aufweist.

8. LIDAR-Vorrichtung nach einem der Ansprüche 1 bis 6, wobei der mindestens eine erzeugte Strahl (4, 8) eine Punktform aufweist.

9. LIDAR-Vorrichtung nach einem der Ansprüche 1 bis 8, wobei die Ablenkeinheit (18) einen planen oder gekrümmten Spiegel aufweist.

10. Verfahren (22) zum Betrieb einer LIDAR-Vorrichtung (1) gemäß einem der vorhergehenden Ansprüche zum Abtasten eines Abtastwinkels mit mindestens einem Strahl (16), wobei
- mindestens ein Strahl (4) erzeugt wird (24),
- der mindestens eine Strahl (8) durch eine Erzeugungsoptik (6) angepasst wird (26),
- der mindestens eine Strahl (8) durch die mindestens eine drehbare Zylinderlinse (12, 14) um eine optische Achse (A) gedreht wird (28),
- der mindestens eine Strahl (16) durch die rotierbare Ablenkeinheit (18) entlang eines Abtastwinkels abgelenkt wird (30),
- mindestens ein an einem Objekt reflektierter Strahl von dem Detektor empfangen und registriert wird (32).

## Claims

1. LIDAR apparatus (1) for scanning a scanning angle with at least one beam (16), comprising at least one radiation source (2) for generating the at least one generated beam (4), comprising a rotatable deflection unit (18) for deflecting the at least one generated beam (4) and comprising a detector for receiving at least one beam reflected at an object, wherein at least two cylindrical lenses (12, 14) are arranged in a beam path of the at least one beam (8) between the radiation source (2) and the deflection unit (18), and wherein at least one of the at least two cylindrical lenses (12, 14) is rotatable, **characterized in that**
the at least two cylindrical lenses (12, 14) are arranged so as to be offset by an angle with respect to one another.

2. LIDAR apparatus according to Claim 1, wherein the deflection unit (18) has a distance from the cylindrical lens (14), which is adjacent to the deflection unit (18), with the distance corresponding to a focal length of the adjacent cylindrical lens (14).

3. LIDAR apparatus according to Claim 2, wherein the at least two cylindrical lenses (12, 14) are arranged so as to be rotated by an angle of 45° with respect to one another.

4. LIDAR apparatus according to Claim 1, wherein the deflection unit (18) has a distance from the cylindrical lens (14), which is adjacent to the deflection unit (18), with the distance being larger than the focal length of the adjacent cylindrical lens (14), wherein the at least two cylindrical lenses (12, 14) are arranged so as to be rotated by angle of 90° with respect to one another.

5. LIDAR apparatus according to any of Claims 1 to 4, wherein at least one cylindrical lens (12, 14) is rotatable synchronously with the deflection unit.

6. LIDAR apparatus according to any of Claims 1 to 5, wherein at least one cylindrical lens (12) is stationary.

7. LIDAR apparatus according to any of Claims 1 to 6, wherein the at least one generated beam (4, 8) has the shape of a line.

8. LIDAR apparatus according to any of Claims 1 to 6, wherein the at least one generated beam (4, 8) has the shape of a point.

9. LIDAR apparatus according to any of Claims 1 to 8, wherein the deflection unit (18) has a plane or curved mirror.

10. Method (22) for operating a LIDAR apparatus (1) according to any of the preceding claims for scanning a scanning angle with at least one beam (16), wherein
- at least one beam (4) is generated (24),
- the at least one beam (8) is adapted by a generating optical unit (6) (26),
- the at least one beam (8) is rotated about an optical axis (A) by way of the at least one rotatable cylindrical lens (12, 14) (28),
- the at least one beam (16) is deflected along a scanning angle by way of the rotatable deflection unit (18) (30),
- at least one beam reflected at an object is received and registered by the detector (32).

## Revendications

1. Dispositif LIDAR (1) permettant de balayer un angle de balayage par au moins un faisceau (16), comprenant au moins une source de rayonnement (2) pour produire au moins un faisceau produit (4), une unité de déviation rotative (18) pour dévier ledit au moins un faisceau produit (4), et un détecteur pour recevoir au moins un faisceau réfléchi sur un objet, dans lequel au moins deux lentilles cylindriques (12, 14) sont disposées dans un chemin optique dudit au moins un faisceau (8) entre la source de rayonnement (2) et l'unité de déviation (18), et dans lequel au moins l'une desdites au moins deux lentilles cylindriques (12, 14) peut tourner,
**caractérisé en ce que**
lesdites au moins deux lentilles cylindriques (12, 14) sont disposées de manière décalée l'une par rapport à l'autre selon un angle.

2. Dispositif LIDAR selon la revendication 1, dans lequel l'unité de déviation (18) présente une distance par rapport à l'unité de déviation (18) d'une lentille cylindrique (14) voisine qui correspond à une focale de la lentille cylindrique (14) voisine.

3. Dispositif LIDAR selon la revendication 2, dans lequel lesdites au moins deux lentilles cylindriques (12, 14) sont disposées de manière tournée l'une par rapport à l'autre d'un angle de 45°.

4. Dispositif LIDAR selon la revendication 1, dans lequel l'unité de déviation (18) présente une distance par rapport à l'unité de déviation (18) d'une lentille cylindrique (14) voisine qui est supérieure à la focale de la lentille cylindrique (14) voisine, lesdites au moins deux lentilles cylindriques (12, 14) étant disposées de manière tournée l'une par rapport à l'autre d'un angle de 90°.

5. Dispositif LIDAR selon l'une quelconque des revendications 1 à 4, dans lequel au moins une lentille cylindrique (12, 14) peut tourner de manière synchrone avec l'unité de déviation.

6. Dispositif LIDAR selon l'une quelconque des revendications 1 à 5, dans lequel au moins une lentille cylindrique (12) est disposée de manière stationnaire.

7. Dispositif LIDAR selon l'une quelconque des revendications 1 à 6, dans lequel ledit au moins un faisceau produit (4, 8) présente une forme de ligne.

8. Dispositif LIDAR selon l'une quelconque des revendications 1 à 6, dans lequel ledit au moins un faisceau produit (4, 8) présente une forme de point.

9. Dispositif LIDAR selon l'une quelconque des revendications 1 à 8, dans lequel l'unité de déviation (18) présente un miroir plan ou courbe.

10. Procédé (22) permettant de faire fonctionner un dispositif LIDAR (1) selon l'une quelconque des revendications précédentes, pour balayer un angle de balayage par au moins un faisceau (16), dans lequel
- au moins un faisceau (4) est produit (24),
- ledit au moins un faisceau (8) est adapté (26) par une optique de production (6),
- ledit au moins un faisceau (8) est tourné (28) par ladite au moins une lentille cylindrique rotative (12, 14) autour d'un axe optique (A),
- ledit au moins un faisceau (16) est dévié (30) par l'unité de déviation rotative (18) le long d'un angle de balayage,
- au moins un faisceau réfléchi sur un objet est reçu et enregistré (32) par le détecteur.
